# EUROPEAN PATENT APPLICATION

(11) **EP 4 354 055 A1**
(43) Date of publication of application: **17.04.2024**
(21) Application number: 22819127.6
(22) Date of filing: 11.03.2022
(51) Int. Cl.: F25D 11/02, F25D 29/00, A23L 13/10, A23L 13/70, A23B 4/06

(54) **REFRIGERATING AND FREEZING APPARATUS AND CONTROL METHOD THEREFOR**

(30) Priority: 07.06.2021 CN 202110632628
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: CHEN, Tong, Qingdao, Shandong 266101 (CN)
(74) Representative: Winter, Brandl - Partnerschaft mbB
(86) International application number: PCT/CN2022/080434
(87) International publication number: WO 2022/257522

(57) **Abstract**

Disclosed are a refrigerating and freezing device and a control method thereof; an aging space is formed inside the refrigerating and freezing device; the control method includes: acquiring attribute information of a to-be-aged material in the aging space; judging whether the to-be-aged material meets an aging condition according to the attribute information of the to-be-aged material; and when the to-be-aged material meets the aging condition, initiating aging. With the above method, the refrigerating and freezing device according to the present invention can automatically detect whether the to-be-aged material is suitable for aging, thus facilitating timely loss stopping and improving an intelligent level. The method according to the present invention can solve, to a certain extent, aging failure caused by conditions of the to-be-aged material, and avoid a loss of a user and pollution of the aging space caused by spoiling of the food material.

## Description

### TECHNICAL FIELD

The present invention relates to refrigeration, and in particular, to a refrigerating and freezing device and a control method thereof.

### BACKGROUND

Aging refers to a process of slowly and naturally fermenting a to-be-aged material under proper temperature and humidity conditions to generate a better flavor.

However, the inventor realizes that not all food materials are suitable for aging. Some refrigerating and freezing devices in a prior art have an aging function, can be configured to age the to-be-aged material, but cannot detect whether the to-be-aged material is suitable for aging. When the food materials which are not suitable for aging are aged by the refrigerating and freezing device, the food materials may spoil, thus causing waste of the food materials and electric power, polluting an aging space, and reducing user experiences.

### SUMMARY

An object of the present invention is to overcome at least one of technical defects in a prior art and provide a refrigerating and freezing device and a control method thereof.

A further object of the present invention is to enable the refrigerating and freezing device to automatically detect whether a to-be-aged material is suitable for aging, thus facilitating timely loss stopping.

Another object of the present invention is to control operation parameters of an aging process according to conditions of the to-be-aged material, thereby optimizing an aging effect.

A still another object of the present invention is to prompt a user in time when the to-be-aged material is determined not to be suitable for aging, so as to avoid adverse consequences.

Particularly, according to an aspect of the present invention, there is provided a control method of a refrigerating and freezing device, an aging space being formed inside the refrigerating and freezing device; the control method including: acquiring attribute information of a to-be-aged material in the aging space; judging whether the to-be-aged material meets an aging condition according to the attribute information of the to-be-aged material; and when the to-be-aged material meets the aging condition, initiating aging.

Optionally, the attribute information of the to-be-aged material includes category information for indicating a category of the to-be-aged material, weight information for indicating a weight of the to-be-aged material, and freshness information for indicating a freshness of the to-be-aged material; the step of judging whether the to-be-aged material meets an aging condition according to the attribute information of the to-be-aged material includes: sequentially judging whether the category information, the weight information and the freshness information meet the aging condition; and when the category information, the weight information and the freshness information meet the aging condition, determining that the to-be-aged material meets the aging condition.

Optionally, the step of judging whether the category information meets the aging condition includes: acquiring a preset aging material category library, category information of a plurality of standard aging materials suitable for aging being pre-stored in the aging material category library; judging whether the to-be-aged material is one of the plurality of standard aging materials; and when the to-be-aged material is one of the plurality of standard aging materials, determining that the category information of the to-be-aged material meets the aging condition.

Optionally, the step of judging whether the weight information meets the aging condition includes: acquiring a weight threshold corresponding to the category information of the to-be-aged material; judging whether the weight information of the to-be-aged material does not exceed the weight threshold; and when the weight information of the to-be-aged material does not exceed the weight threshold, determining that the weight information of the to-be-aged material meets the aging condition.

Optionally, the step of judging whether the freshness information meets the aging condition includes: acquiring a standard freshness corresponding to the category information of the to-be-aged material; judging whether the freshness of the to-be-aged material is greater than or equal to the standard freshness; and when the freshness of the to-be-aged material is greater than or equal to the standard freshness, determining that the freshness information of the to-be-aged material meets the aging condition.

Optionally, the step of initiating aging includes: acquiring operation parameters corresponding to the attribute information of the to-be-aged material; and controlling operation of the refrigerating and freezing device according to the operation parameters, so as to age the to-be-aged material in the aging space.

Optionally, after the step of initiating aging, the control method further includes: detecting an aging degree of the to-be-aged material; and when the aging degree of the to-be-aged material reaches a preset degree threshold, quitting aging.

Optionally, before the acquiring operation parameters corresponding to the attribute information of the to-be-aged material, the step of initiating aging further includes: sending a first prompt signal to prompt a user to initiate an aging mode of the refrigerating and freezing device; and receiving a feedback signal for the first prompt signal, and executing the step of acquiring operation parameters corresponding to the attribute information of the to-be-aged material.

Optionally, after the step of judging whether the to-be-aged material meets an aging condition according to the attribute information of the to-be-aged material, the control method further includes: sending a second prompt signal to prompt the user not to initiate the aging mode of the refrigerating and freezing device in a case where the to-be-aged material does not meet the aging condition.

According to another aspect of the present invention, there is further provided a refrigerating and freezing device, including: a processing module and a storage module, wherein the storage module has a machine-executable program stored therein, and the machine-executable program, when executed by the processing module, is configured to implement the control method according to any one of the above descriptions.

In the refrigerating and freezing device and the control method thereof according to the present invention, the refrigerating and freezing device can automatically acquire the attribute information of the to-be-aged material in the aging space and judge whether the to-be-aged material meets the aging condition according to the attribute information of the to-be-aged material, such that the refrigerating and freezing device can automatically detect whether the to-be-aged material is suitable for aging, thus facilitating timely loss stopping and improving an intelligent level. The method according to the present invention can solve, to a certain extent, aging failure caused by the conditions of the to-be-aged material, and avoid a loss of the user and pollution of the aging space caused by spoiling of the food material.

Further, for the refrigerating and freezing device and the control method thereof according to the present invention, in the process of initiating aging, the refrigerating and freezing device can acquire the operation parameters corresponding to the attribute information of the to-be-aged material and can execute an aging function according to the operation parameters, such that the refrigerating and freezing device according to the present invention can control the operation parameters of the aging process according to the conditions of the to-be-aged material, thereby facilitating optimization of the aging effect.

Still further, in the refrigerating and freezing device and the control method thereof according to the present invention, the refrigerating and freezing device can send the second prompt signal in the case where the to-be-aged material is determined not to be suitable for aging, such that the user can be warned to give up aging in time to avoid the adverse consequences.

The above and other objects, advantages and features of the present invention will become more apparent to those skilled in the art from the following detailed description of specific embodiments thereof taken in conjunction with the accompanying drawings.

### BRIEF DESCRIPTION OF THE DRAWINGS

Some specific embodiments of the invention will be described in detail hereinafter by way of example and not by way of limitation with reference to the accompanying drawings. The same reference numerals identify the same or similar components or parts in the drawings. Those skilled in the art should appreciate that the drawings are not necessarily drawn to scale. In the drawings:
FIG. 1 is a schematic block diagram of a refrigerating and freezing device according to an embodiment of the present invention;
FIG. 2 is a schematic structural diagram of the refrigerating and freezing device according to the embodiment of the present invention;
FIG. 3 is a schematic structural diagram of an aging container of a refrigerating and freezing device according to the embodiment of the present invention;
FIG. 4 is another schematic structural diagram of the aging container of the refrigerating and freezing device shown in FIG. 3;
FIG. 5 is a schematic diagram of a control method of a refrigerating and freezing device according to an embodiment of the present invention; and
FIG. 6 is a diagram of a control flow of the refrigerating and freezing device according to the embodiment of the present invention.

### DETAILED DESCRIPTION

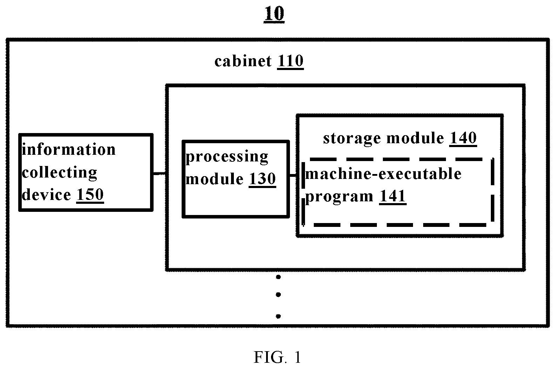

FIG. 1 is a schematic block diagram of a refrigerating and freezing device 10 according to an embodiment of the present invention. An aging space 162 is formed inside the refrigerating and freezing device 10, and the refrigerating and freezing device 10 may generally include a processing module 130 and a storage module 140, and may further include a cabinet 110, an information collecting device 150 and a refrigerating system. The aging space 162, the processing module 130, the storage module 140, the information collecting device 150 and the refrigerating system may be provided in the cabinet 110.

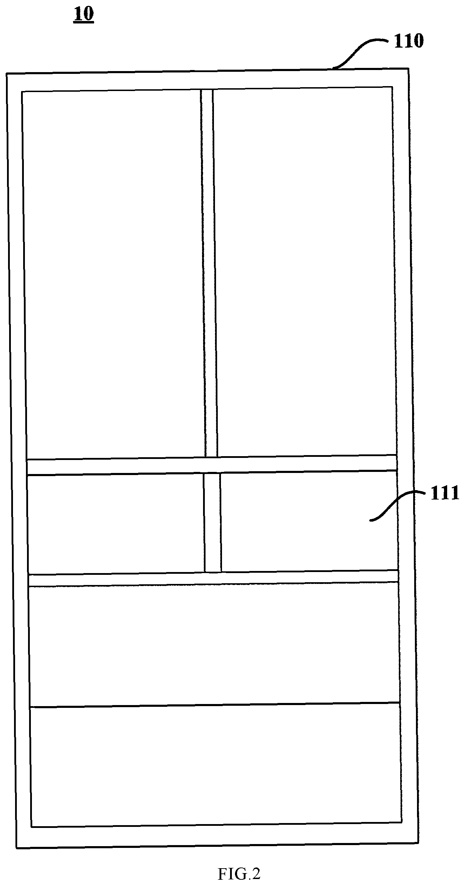

A storage compartment 111 is formed inside the cabinet 110. FIG. 2 is a schematic structural diagram of the refrigerating and freezing device 10 according to the embodiment of the present invention. In the present embodiment, a plurality of storage compartments 111 may be formed in the cabinet 110, and may include, for example, a refrigerating compartment, a freezing compartment, an aging compartment, or the like. The aging space 162 for aging a to-be-aged material is formed inside the aging compartment.

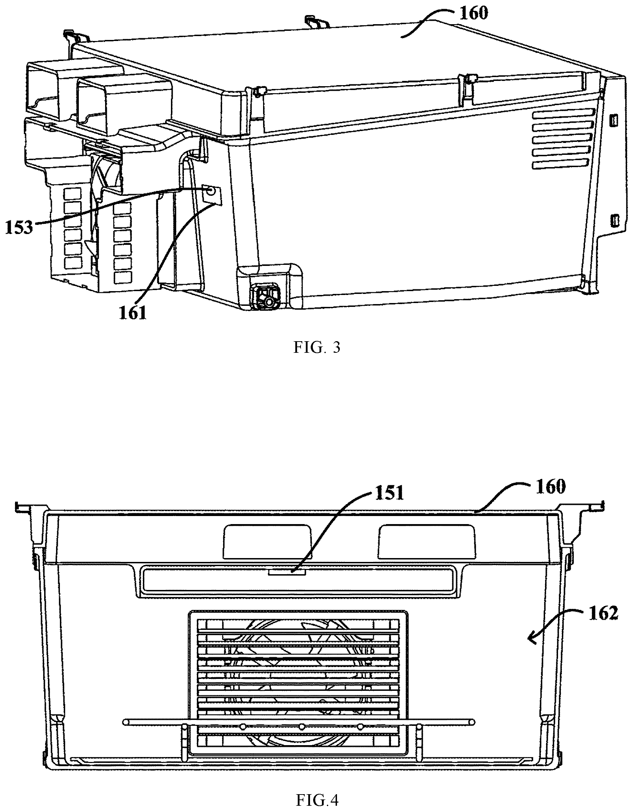

In some embodiments, an aging container 160 may be provided inside the aging compartment, and the aging space 162 may refer to an interior space of the aging container 160. For example, FIG. 3 is a schematic structural diagram of the aging container 160 of the refrigerating and freezing device 10 according to the embodiment of the present invention. The aging container 160 is configured as a storage drawer.

The refrigerating system may be configured as a compression refrigerating system. For example, the refrigerating system may include a compressor, a condenser, a throttling device, and an evaporator. The refrigerating system can supply cooling energy to the storage compartment 111 by a refrigerant absorbing heat in the evaporator to realize a phase change. In the present embodiment, the evaporator of the refrigerating system may be in airflow communication with the aging space 162 to facilitate cooling energy supply to the aging space 162, so as to regulate a temperature and/or a humidity of the aging space 162.

The information collecting device 150 is configured to collect attribute information of the to-be-aged material in the aging space 162. The attribute information of the to-be-aged material may include category information for indicating a category of the to-be-aged material, weight information for indicating a weight of the to-be-aged material, and freshness information for indicating a freshness of the to-be-aged material.

The information collecting device 150 in the present embodiment may include an image collecting module 151, a weight collecting module (not shown) and a freshness collecting module 153. The image collecting module 151 is configured to acquire the category information of the to-be-aged material, the weight collecting module is configured to acquire the weight information of the to-be-aged material, and the freshness collecting module 153 is configured to acquire the freshness information of the to-be-aged material.

FIG. 4 is another schematic structural diagram of the aging container 160 of the refrigerating and freezing device 10 shown in FIG. 2.

The image collecting module 151 may include a camera and an image processor. The camera shoots an image of the to-be-aged material, and the image processor compares the shot image with a pre-stored image database, such that the category information of the to-be-aged material can be obtained. The image collecting module 151 may be provided at an air return port 161 of the aging container 160, or may be provided on a top wall of the aging container 160 or a front panel of the drawer, or may be provided at a designated position of the aging space 162 according to actual needs.

In some embodiments, in the information collecting device 150, the image collecting module 151 may be replaced with a spectral imager. The spectral imager can obtain the category information of the to-be-aged material by shooting spectral data of the to-be-aged material and comparing the shot spectral data with a pre-stored spectral database.

The weight collecting module may include a weight sensor provided at a bottom of the aging space 162; for example, the bottom of the aging space 162 may be provided with a storage tray, and the weight sensor may be provided at a bottom of the storage tray.

The freshness collecting module 153 may include an odor sensor and an odor processor, and may be provided in an air duct of the aging space 162, for example, at the air return port 161 of the aging container 160, or near a fan of the aging space 162. The odor sensor may be configured as a plurality of odor collecting units for collecting concentrations of a plurality of different gases, such as hydrogen sulfide, trimethylamine, methyl mercaptan, ammonia gas, or the like. The odor sensor collects odor information of the to-be-aged material, and the odor processor processes the odor information collected by the odor sensor, such that the freshness of the to-be-aged material can be obtained.

The storage module 140 and the processing module 130 may form a part of a main control board of the refrigerating and freezing device 10. The storage module 140 has a machine-executable program 141 stored therein, and the machine-executable program 141, when executed by the processing module 130, is configured to implement a control method of the refrigerating and freezing device 10 according to any one of the following embodiments. The processing module 130 may be configured as a central processing unit (CPU), a digital processor (DSP), or the like. The storage module 140 is configured to store programs executed by the processing module 130. The storage module 140 may be configured as any medium which can be configured to carry or store desired program codes in the form of instructions or data structures and can be accessed by a computer, but is not limited thereto. The storage module 140 may also be configured as a combination of various memories. Since the machine-executable program 141, when executed by the processing module 130, implements processes of the method embodiments described below and can achieve the same technical effects, details are not repeated herein to avoid repetition.

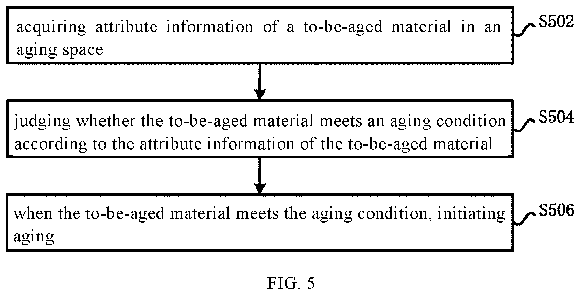

FIG. 5 is a schematic diagram of the control method of the refrigerating and freezing device 10 according to an embodiment of the present invention. The control method may generally include:

step S502: acquiring attribute information of a to-be-aged material in an aging space 162, such as category information for indicating a category of the to-be-aged material, weight information for indicating a weight of the to-be-aged material, freshness information for indicating a freshness of the to-be-aged material, or the like.

Step S504: judging whether the to-be-aged material meets an aging condition according to the attribute information of the to-be-aged material. For example, the fact that the to-be-aged material meets the aging condition means that the category, weight and freshness of the to-be-aged material meet aging requirements. The fact that the to-be-aged material does not meet the aging condition means that the category, weight and freshness of the to-be-aged material do not meet the aging requirements, and in this case, when aging is initiated, the to-be-aged material may spoil and a flavor improving effect cannot be achieved.

Step S506: initiating aging when the to-be-aged material meets the aging condition. That is, aging can be performed only when the attribute information of the to-be-aged material meets the aging requirement.

With the above-mentioned method, the refrigerating and freezing device 10 can automatically acquire the attribute information of the to-be-aged material in the aging space 162 and judge whether the to-be-aged material meets the aging condition according to the attribute information of the to-be-aged material, such that the refrigerating and freezing device 10 can automatically detect whether the to-be-aged material is suitable for aging, thus facilitating timely loss stopping and improving an intelligent level.

The step S504 may include: sequentially judging whether the category information, the weight information and the freshness information meet the aging condition; and when the category information, the weight information and the freshness information meet the aging condition, determining that the to-be-aged material meets the aging condition. That is, the to-be-aged material can be determined to meet the aging condition only when the category information, the weight information and the freshness information of the to-be-aged material meet the aging requirements.

The judgment is sequentially performed in order of the category information, the weight information and the freshness information, and when the category information does not meet the aging condition, whether the weight information and the freshness information meet the aging condition may not be judged, which may simplify the judgment process.

The step of judging whether the category information meets the aging condition includes: acquiring a preset aging material category library, category information of a plurality of standard aging materials suitable for aging being pre-stored in the aging material category library; judging whether the to-be-aged material is one of the plurality of standard aging materials; and when the to-be-aged material is one of the plurality of standard aging materials, determining that the category information of the to-be-aged material meets the aging condition. The fact that the to-be-aged material is one of the plurality of standard aging materials means that the category of the to-be-aged material is identical to the category of one standard aging material in the aging material category library. That is, when the category of the to-be-aged material is identical to the category of any standard aging material, the category information of the to-be-aged material can be determined to meet the aging condition. The aging material category library may be preset according to a daily aging habit, and for example, the aging material category library may store category information of standard aging materials, such as beef, mutton, chicken, fish, duck, or the like, in advance.

The step of judging whether the weight information meets the aging condition further includes: acquiring a weight threshold corresponding to the category information of the to-be-aged material; judging whether the weight information of the to-be-aged material does not exceed the weight threshold; and when the weight information of the to-be-aged material does not exceed the weight threshold, determining that the weight information of the to-be-aged material meets the aging condition. It should be noted that the step of judging whether the weight information meets the aging condition is executed only when the category information of the to-be-aged material meets the aging condition; when the category information of the to-be-aged material does not meet the aging condition, the step of judging whether the weight information meets the aging condition is not executed, and at this point, the refrigerating and freezing device 10 may send a second prompt signal described below.

One weight threshold may be preset for each standard aging material, and may include a lowest weight and a highest weight of the standard aging material suitable for aging. When the weight of the to-be-aged material is between the lowest weight and the highest weight, the category of the to-be-aged material is not beyond the weight threshold, and at this point, the weight of the to-be-aged material meets the aging requirement.

The step of judging whether the freshness information meets the aging condition includes: acquiring a standard freshness corresponding to the category information of the to-be-aged material; judging whether the freshness of the to-be-aged material is greater than or equal to the standard freshness; and when the freshness of the to-be-aged material is greater than or equal to the standard freshness, determining that the freshness information of the to-be-aged material meets the aging condition. It should be noted that the step of judging whether the freshness information meets the aging condition is executed only when the weight information of the to-be-aged material meets the aging condition; when the weight information of the to-be-aged material does not meet the aging condition, the step of judging whether the freshness information meets the aging condition is not executed, and at this point, the refrigerating and freezing device 10 may send the second prompt signal described below.

One standard freshness may be preset for each standard aging material, and refers to a minimum freshness of the standard aging material suitable for aging. In a case where the freshness of the to-be-aged material is greater than or equal to the standard freshness, the freshness of the to-be-aged material meets the aging requirement. In a case where the freshness of the to-be-aged material is less than the standard freshness, the freshness of the to-be-aged material does not meet the aging requirement, and at this point, the refrigerating and freezing device 10 may send the second prompt signal described below.

The inventor recognizes that in some cases, even when the to-be-aged material belongs to a category suitable for aging, when the weight of the to-be-aged material is insufficient or overlarge, or when the freshness of the to-be-aged material is low, a flavor desired by the user cannot be realized by aging. In the present embodiment, in a case where the category information of the to-be-aged material is determined to meet the aging condition, whether the to-be-aged material is suitable for aging can be comprehensively evaluated by further judging whether the weight information and the freshness information meet the aging condition, which facilitates an improvement of precision of the judgment process.

The step of initiating aging may include: acquiring operation parameters corresponding to the attribute information of the to-be-aged material; and controlling operation of the refrigerating and freezing device 10 according to the operation parameters, so as to age the to-be-aged material in the aging space 162. That is, when the to-be-aged material is determined to meet the aging condition, the refrigerating and freezing device 10 may further automatically determine the operation parameters of the aging process, which facilitates an improvement of an automation level of the refrigerating and freezing device 10 and a reduction of a workload of the user. The operation parameter can refer to at least one of parameters of an aging time, an aging temperature, an aging humidity, an aging air speed, or the like.

Each standard aging material in an aging material database is correspondingly provided with the operation parameters suitable for the standard aging material. It should be noted that the operation parameters corresponding to the standard aging material may be preset according to a preset standard weight and the preset standard freshness. That is, the operation parameters corresponding to the standard aging material are suitable for the standard aging material having the preset standard weight and the preset standard freshness.

With the above method, in the process of initiating aging, the refrigerating and freezing device 10 can acquire the operation parameters corresponding to the attribute information of the to-be-aged material and can execute an aging function according to the operation parameters, such that the refrigerating and freezing device 10 according to the present embodiment can control the operation parameters of the aging process according to conditions of the to-be-aged material, thereby facilitating optimization of an aging effect.

In some optional embodiments, before the acquiring operation parameters corresponding to the attribute information of the to-be-aged material, the step of initiating aging may further include: sending a first prompt signal to prompt a user to initiate an aging mode of the refrigerating and freezing device 10; and receiving a feedback signal for the first prompt signal, and executing the step of acquiring operation parameters corresponding to the attribute information of the to-be-aged material. That is, the refrigerating and freezing device 10 may perform the step of acquiring operation parameters corresponding to the attribute information of the to-be-aged material after receiving the feedback signal of the user, which facilitates an improvement of reliability of the operation process of the refrigerating and freezing device 10.

The first prompt signal may be in any form; for example, the first prompt signal may be a text message, such as "the food material is suitable for aging"; the refrigerating and freezing device 10 may have a display module, and the processing module 130 may generate the first prompt signal and output the first prompt signal to the display module after determining that the to-be-aged material meets the aging condition.

After the step of judging whether the to-be-aged material meets an aging condition according to the attribute information of the to-be-aged material, the above control method may further include: sending a second prompt signal to prompt the user not to initiate the aging mode of the refrigerating and freezing device 10 in a case where the to-be-aged material does not meet the aging condition. The refrigerating and freezing device 10 can send the second prompt signal in the case where the to-be-aged material is determined not to be suitable for aging, such that the user can be warned to give up aging in time to avoid adverse consequences. As long as any one of the category information, the weight information and the freshness information of the to-be-aged material does not meet the aging requirement, the to-be-aged material can be determined not to be suitable for aging.

The second prompt signal may also be in any form; for example, the second prompt signal may be a text message, such as "the food material is not suitable for aging"; the processing module 130 may generate the second prompt signal and output the second prompt signal to the display module after determining that the to-be-aged material does not meet the aging condition. In some further embodiments, the second prompt signal may further include a reason why the food material is not suitable for aging, for example, text messages, such as "the food material is not fresh", "the food material is overweight", or "the food material has an improper category".

In some embodiments, after the step of initiating aging, the control method further includes: detecting an aging degree of the to-be-aged material; and when the aging degree of the to-be-aged material reaches a preset degree threshold, quitting aging. That is, when the aging degree of the to-be-aged material meets user requirements, aging is automatically ended, which can save energy consumption of the refrigerating and freezing device 10. The aging degree may be represented by a percentage; for example, the aging degree of the to-be-aged material may be 100% when a taste, the flavor, or the like, of the to-be-aged material meet the user requirement. The degree threshold can be preset by the user according to characteristics of the flavors, the tastes, or the like, of the to-be-aged material under different aging degrees. For example, the degree threshold in the present embodiment may be 100%.

In some optional embodiments, the aging degree may be calculated according to an actual aging time and a set aging time of the to-be-aged material, the actual aging time is a time during which the to-be-aged material is aged in the aging space, and the set aging time may be an aging time during which the flavor, taste, or the like, of the to-be-aged material meet the user requirement; for example, the set aging time suitable for each to-be-aged material may be preset for the to-be-aged material. The aging degree may refer to a ratio between the actual aging time and the set aging time.

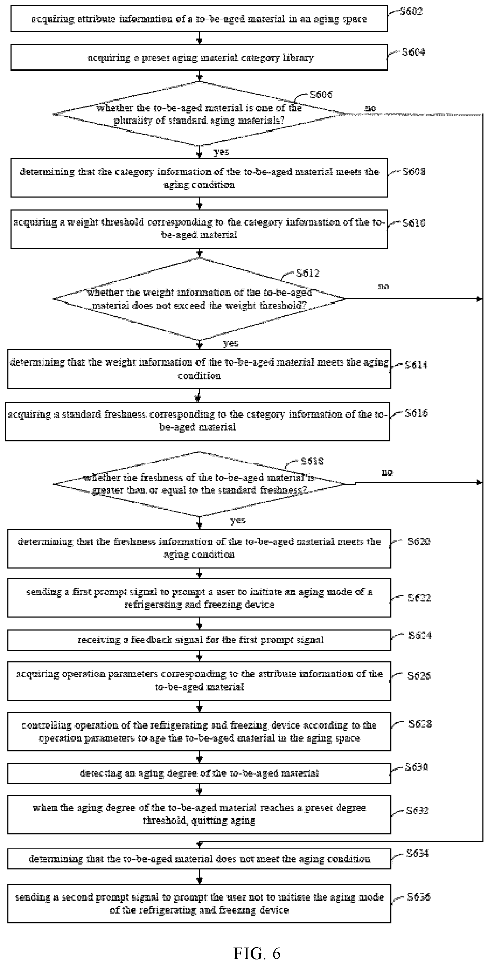

FIG. 6 is a diagram of a control flow of the refrigerating and freezing device 10 according to the embodiment of the present invention. The control flow may generally include:

step S602: acquiring attribute information of a to-be-aged material in an aging space 162. The attribute information of the to-be-aged material includes category information for indicating a category of the to-be-aged material, weight information for indicating a weight of the to-be-aged material, and freshness information for indicating a freshness of the to-be-aged material.

Step S604: acquiring a preset aging material category library, category information of a plurality of standard aging materials suitable for aging being pre-stored in the aging material category library.

Step S606: judging whether the to-be-aged material is one of the plurality of standard aging materials, when the to-be-aged material is one of the plurality of standard aging materials, performing step S608, and when the to-be-aged material is not one of the plurality of standard aging materials, performing step S634.

Step S608: determining that the category information of the to-be-aged material meets the aging condition.

Step S610: acquiring a weight threshold corresponding to the category information of the to-be-aged material.

Step S612: judging whether the weight information of the to-be-aged material does not exceed the weight threshold, when the weight information of the to-be-aged material does not exceed the weight threshold, performing step S614, and when the weight information of the to-be-aged material exceeds the weight threshold, performing step S634.

Step S614: determining that the weight information of the to-be-aged material meets the aging condition.

Step S616: acquiring a standard freshness corresponding to the category information of the to-be-aged material.

Step S618: judging whether the freshness of the to-be-aged material is greater than or equal to the standard freshness, when the freshness of the to-be-aged material is greater than or equal to the standard freshness, performing step S620, and when the freshness of the to-be-aged material is not greater than or equal to the standard freshness, performing step S634.

Step S620: determining that the freshness information of the to-be-aged material meets the aging condition. In some embodiments, in a case where the freshness information of the to-be-aged material is determined to meet the aging condition, the step of determining that the to-be-aged material meets the aging condition may be performed first, and then, the following step S622 may be performed.

Step S622: sending a first prompt signal to prompt a user to initiate an aging mode of a refrigerating and freezing device 10.

Step S624: receiving a feedback signal for the first prompt signal.

Step S626: acquiring operation parameters corresponding to the attribute information of the to-be-aged material.

Step S628: controlling operation of the refrigerating and freezing device 10 according to the operation parameters to age the to-be-aged material in the aging space 162.

Step S630: detecting an aging degree of the to-be-aged material.

Step S632: when the aging degree of the to-be-aged material reaches a preset degree threshold, quitting aging.

Step S634: determining that the to-be-aged material does not meet the aging condition.

Step S636: sending a second prompt signal to prompt the user not to initiate the aging mode of the refrigerating and freezing device 10.

With the above-mentioned method, the refrigerating and freezing device 10 can automatically acquire the attribute information of the to-be-aged material in the aging space 162 and judge whether the to-be-aged material meets the aging condition according to the attribute information of the to-be-aged material, such that the refrigerating and freezing device 10 can automatically detect whether the to-be-aged material is suitable for aging, thus facilitating timely loss stopping and improving an intelligent level. The method according to the present invention can solve, to a certain extent, aging failure caused by the conditions of the to-be-aged material, and avoid a loss of the user and pollution of the aging space caused by spoiling of the food material.

So far, it should be appreciated by those skilled in the art that while various exemplary embodiments of the invention have been shown and described in detail herein, many other variations or modifications which are consistent with the principles of this invention may be determined or derived directly from the disclosure of the present invention without departing from the spirit and scope of the invention. Accordingly, the scope of the invention should be understood and interpreted to cover all such other variations or modifications.

## Claims

1. A control method of a refrigerating and freezing device, an aging space being formed inside the refrigerating and freezing device; the control method comprising:
acquiring attribute information of a to-be-aged material in the aging space;
judging whether the to-be-aged material meets an aging condition according to the attribute information of the to-be-aged material; and
when the to-be-aged material meets the aging condition, initiating aging.

2. The control method according to claim 1,
wherein the attribute information of the to-be-aged material comprises category information for indicating a category of the to-be-aged material, weight information for indicating a weight of the to-be-aged material, and freshness information for indicating a freshness of the to-be-aged material; and
the step of judging whether the to-be-aged material meets an aging condition according to the attribute information of the to-be-aged material comprises:
sequentially judging whether the category information, the weight information and the freshness information meet the aging condition; and
when the category information, the weight information and the freshness information meet the aging condition, determining that the to-be-aged material meets the aging condition.

3. The control method according to claim 2,
wherein the step of judging whether the category information meets the aging condition comprises:
acquiring a preset aging material category library, category information of a plurality of standard aging materials suitable for aging being pre-stored in the aging material category library;
judging whether the to-be-aged material is one of the plurality of standard aging materials; and
when the to-be-aged material is one of the plurality of standard aging materials, determining that the category information of the to-be-aged material meets the aging condition.

4. The control method according to claim 2,
wherein the step of judging whether the weight information meets the aging condition comprises:
acquiring a weight threshold corresponding to the category information of the to-be-aged material;
judging whether the weight information of the to-be-aged material does not exceed the weight threshold; and
when the weight information of the to-be-aged material does not exceed the weight threshold, determining that the weight information of the to-be-aged material meets the aging condition.

5. The control method according to claim 2,
wherein the step of judging whether the freshness information meets the aging condition comprises:
acquiring a standard freshness corresponding to the category information of the to-be-aged material;
judging whether the freshness of the to-be-aged material is greater than or equal to the standard freshness; and
when the freshness of the to-be-aged material is greater than or equal to the standard freshness, determining that the freshness information of the to-be-aged material meets the aging condition.

6. The control method according to claim 2,
wherein the step of initiating aging comprises:
acquiring operation parameters corresponding to the attribute information of the to-be-aged material; and
controlling operation of the refrigerating and freezing device according to the operation parameters, so as to age the to-be-aged material in the aging space.

7. The control method according to claim 1, after the step of initiating aging, further comprising:
detecting an aging degree of the to-be-aged material; and
when the aging degree of the to-be-aged material reaches a preset degree threshold, quitting aging.

8. The control method according to claim 6, wherein before the acquiring operation parameters corresponding to the attribute information of the to-be-aged material, the step of initiating aging further comprises:
sending a first prompt signal to prompt a user to initiate an aging mode of the refrigerating and freezing device; and
receiving a feedback signal for the first prompt signal, and executing the step of acquiring operation parameters corresponding to the attribute information of the to-be-aged material.

9. The control method according to claim 1, after the step of judging whether the to-be-aged material meets an aging condition according to the attribute information of the to-be-aged material, further comprising:
sending a second prompt signal to prompt the user not to initiate the aging mode of the refrigerating and freezing device in a case where the to-be-aged material does not meet the aging condition.

10. A refrigerating and freezing device, comprising:
a processing module and a storage module, wherein the storage module has a machine-executable program stored therein, and the machine-executable program, when executed by the processing module, is configured to implement the control method according to any one of claims 1 to 9.
